# EUROPÄISCHE PATENTANMELDUNG

(11) **EP 4 491 553 A1**
(43) Veröffentlichungstag der Anmeldung: **15.01.2025**
(21) Anmeldenummer: 24181249.4
(22) Anmeldetag: 10.06.2024
(51) Int. Cl.: B65H 19/12, B65H 19/30

(54) **VORRICHTUNG ZUM WECHSELN EINES COILS ODER EINES KERNS, ANORDNUNG UND VERFAHREN ZUM WECHSELN EINES COILS ODER EINES KERNS**

(30) Priorität: 07.07.2023 DE 102023206476
(71) Anmelder: VOLKSWAGEN AG, 38440 Wolfsburg (DE)
(72) Erfinder: Dersch, Sebastian, 38106 Braunschweig (DE); Pietsch, Tommy, 38102 Braunschweig (DE)

(57) **Zusammenfassung**

Die Erfindung ist auf eine Vorrichtung (1) zum Wechseln eines Coils (2) oder eines Kerns (3) gerichtet, wobei das Coil (2) den hülsenartigen Kern (3) und eine darauf aufgewickelte Folie (4) umfasst; wobei die Vorrichtung (1) gegenüber einer Wickelstation (5), an der die Folie (4) von dem Coil (2) abwickelbar oder auf den Kern (3) aufwickelbar ist, ortsfest angeordnet ist; wobei die Vorrichtung (1) zumindest einen Ständer (6) und einen an dem Ständer (6) beweglich angeordneten Tragarm (7) aufweist, wobei sich der Tragarm (7) entlang einer horizontal verlaufenden ersten Achse (8) erstreckt und wobei das Coil (2) oder der Kern (3) auf dem Tragarm (7) entlang der ersten Achse (8) verschiebbar anordenbar ist.

Die Erfindung ist weiter auf eine Anordnung und auf ein Verfahren zum Wechseln eines Coils oder eines Kerns gerichtet.

## Beschreibung

Die Erfindung betrifft eine Vorrichtung zum Wechseln eines Coils oder eines Kerns, eine Anordnung, insbesondere umfassend die Vorrichtung und eine Wickelstation, sowie ein Verfahren zum Wechseln eines Coils oder eines Kerns.

Die Vorrichtung, die Anordnung sowie das Verfahren dienen insbesondere zum Abwickeln und Aufwickeln von Elektrodenfolien, insbesondere von beschichteten und/ oder unbeschichteten Elektrodenfolien.

Für den Antrieb von Kraftfahrzeugen werden vermehrt Batterien, insbesondere Lithium-Ionen-Batterien eingesetzt. Batterien werden üblicherweise aus Batteriezellen zusammengesetzt, wobei jede Batteriezelle einen Stapel von Anoden-, Kathoden- und Separatorfolien aufweist, die ggf. in Form von Lagen bzw. Materialschichten vorliegen. Zumindest ein Teil der Anoden- und Kathodenfolien sind als elektrische Strom-Ableiter ausgeführt, zur Ableitung des von der Batteriezelle bereitgestellten Stroms hin zu einem außerhalb der Batteriezelle angeordneten Verbraucher. Die einzelnen Elemente eines Stapels werden im Folgenden auch als Elektroden bzw. Folien bezeichnet.

Die einzelnen Folien werden insbesondere als Endlosmaterial bereitgestellt, ggf. beschichtet, z. B. mit einem Aktivmaterial, und wieder aufgewickelt. Die so hergestellten Folien werden dann als aufgewickeltes Coil einem Prozess zur Herstellung von Batteriezellen zugeführt. Dort werden die Coils, umfassend ggf. beschichtete Elektrodenfolien, abgewickelt und z. B. beschnitten bzw. in einzelne Lagen aufgetrennt bzw. zerteilt, so dass die einzelnen Lagen aufeinander gestapelt angeordnet werden können. Unbeschichtete Bereiche von beschichteten Folien können als Ableiter eingesetzt werden.

Die Coils umfassen insbesondere eine sogenannte Wickelhülse (hier als Kern bezeichnet), auf der die Folien aufgewickelt sind und von der die Folien später wieder abgewickelt werden.

Im Anbetracht der fortschreitenden Automatisierung von Produktionsketten in Fabriken zur Herstellung von (Lithium-lonen-)Batteriezellen ist es zwingend erforderlich, die Verkettung zwischen den einzelnen Maschinen zu verbessern. Eine solche Produktionskette umfasst insbesondere die Elektrodenherstellung (also insbesondere das Beschichten, Kalandrieren, Slitten und Notching eines Trägermaterials mit einem Aktivmaterial) und das Stacking (das Stapeln der vereinzelten Lagen von Folien). Diese Prozesse umfassen insbesondere eine Vielzahl von Splicing- (also Verbindungsverfahren zum Verbinden von Elektrodenfolien zu einem Endlosmaterial) und Schneidoperationen (zum Beschneiden oder zum Trennen von einzelnen Lagen von Elektrodenfolien von einem Endlosmaterial). Insbesondere sollen diese Prozesse bzw. Verfahren ein kontinuierliches Herstellungsverfahren ermöglichen.

Ein Splice-Verbindungsverfahren wird insbesondere beim Ab- und Aufwickeln eines Endlosmaterials von einem Coil eingesetzt. Ist eine erste Folie vollständig von dem Coil abgerollt wird an das Ende der ersten Folie eine neue zweite Folie eines bereits in der Maschine zur Verfügung stehenden neuen Coils automatisiert angefügt. Diese Verbindung zwischen der ersten Folie und der zweiten Folie wird als Splice-Stelle bzw. als Fügestelle bezeichnet. Im Anschluss oder zuvor muss das Ende der ersten Folie vom Coil bzw. von der Wickelhülse getrennt werden, um die leere Wickelhülse von dem Prozess zu entkoppeln und aus der Maschine zu entfernen. Die leere Wickelhülse kann dann durch ein neues Coil ersetzt werden.

Insbesondere wird das Endlosmaterial der ersten Folie nach dem Durchlaufen des Prozesses, z. B. dem Beschichten der ersten Folie, wieder auf eine (andere) Wickelhülse aufgewickelt. Nach dem Durchlaufen der Splice-Stelle durch den Prozess (also z. B. dem Beschichten der Folie) muss die erste Folie von der zweiten Folie, wieder getrennt werden, so dass das die erste Folie umfassende Coil aus der Maschine entnehmbar ist. Im Anschluss wird das Ende der zweiten Folie wieder an eine neue bzw. leere Wickelhülse gefügt, so dass eine fehlerfreie Aufwicklung gewährleistet werden kann.

Das Trennen des Endlosmaterials, also das Erzeugen der Trennstelle, wird industriell insbesondere durch einen Messerschnitt oder einen Rollmesserschnitt durchgeführt und ist durch eine komplexe Automatisierungstechnologie geprägt.

Das Verbinden des Folienmaterials mit der Wickelhülse wird industriell insbesondere als Klebeprozess durchgeführt und ist ebenfalls durch eine aufwändige Automatisierung geprägt. Für das Handling der Coils bzw. der Kerne existieren derzeit noch keine vollautomatisierten Prozesse. Insbesondere sind AGVs (automated guided vehicles) aufgrund der geforderten hohen Präzision bei der Übergabe des Coils bzw. Kerns nur schwierig in der Praxis einzusetzen, insbesondere bei einer nur einseitigen Lagerung (Tragarm/ Cantilever) einer Aufnahmeeinrichtung für einen Kern bzw. ein Coil.

Aus der DE 10 2013 110 944 A1 sind ein Verfahren und eine Vorrichtung zum Wechseln von Trägereinheiten mit auf Vorratsrollen aufgewickelten flächigem Verpackungsmaterial innerhalb einer Verpackungsmaschine bekannt.

Aus der WO 03/006355 A1 sind eine Montagevorrichtung und ein Wagen für die Montage und den wahlweisen Transport einer Rolle Material bekannt.

Aus der EP 4 119 475 A1 sind ein System zum Ersatz einer Materialspule für die Herstellung von elektrischen Energiespeichern und ein Verfahren dazu bekannt. Das System umfasst ein selbstfahrendes Fahrzeug, das eine Wickelstation anfahren und ein Coil entnehmen bzw. zuführen kann.

Aufgabe der vorliegenden Erfindung ist es, die mit Bezug auf den Stand der Technik angeführten Probleme zumindest teilweise zu lösen. Insbesondere soll der Prozess des Handlings bzw. der Handhabung der Coils und/oder Kerne verbessert werden, so dass ein hoher Grad an Automatisierung der Produktionskette gewährleistet werden kann.

Zur Lösung dieser Aufgaben trägt eine Vorrichtung gemäß den Merkmalen des unabhängigen Patentanspruchs 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Vorrichtung zum Wechseln eines Coils oder eines Kerns vorgeschlagen. Das Coil umfasst den hülsenartigen Kern und eine darauf aufgewickelte Folie. Die Vorrichtung ist gegenüber einer Wickelstation, an der die Folie von dem Coil abwickelbar oder auf den Kern aufwickelbar ist, ortsfest angeordnet. Die Vorrichtung weist zumindest einen Ständer und einen an dem Ständer angeordneten Tragarm auf, wobei sich der Tragarm entlang einer horizontal verlaufenden ersten Achse erstreckt und wobei der hohle Kern oder das Coil auf dem Tragarm entlang der ersten Achse verschiebbar anordenbar bzw. angeordnet ist. Der Ständer ist mit dem Tragarm gegenüber der Wickelstation zumindest um eine entlang einer vertikalen ersten Richtung verlaufenden Drehachse verdrehbar.

Die hier beschriebene Folie ist insbesondere eine Elektrodenfolie für eine Batteriezelle.

Die Batteriezelle ist insbesondere eine Lithium-lonen-Batteriezelle oder aber eine andere Art von Batteriezelle. Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Batteriezelle gespeicherte elektrische Energie antreibbar ist.

Eine Batteriezelle umfasst insbesondere ein, ein Volumen umschließendes Gehäuse und in dem Volumen angeordnet mindestens eine Elektrodenfolie einer ersten Elektrodenart (z. B. eine Anode), eine Elektrodenfolie einer zweiten Elektrodenart (z. B. eine Kathode) und ein dazwischen angeordnetes Separatormaterial sowie einen Elektrolyten, z. B. einen flüssigen oder einen festen Elektrolyten.

Die einzelnen Folien sind aufeinander angeordnet und bilden insbesondere einen Stapel. Die Elektrodenfolien sind jeweils unterschiedlichen Elektrodenarten zugeordnet, sind also als eine Anode oder eine Kathode ausgeführt. Dabei sind Anoden und Kathoden wechselweise und jeweils durch das Separatormaterial getrennt voneinander angeordnet.

Die Folie umfasst insbesondere ein Trägermaterial einer Elektrodenfolie, eine zumindest ein Aktivmaterial aufweisende Elektrodenfolie oder eine Separatorfolie, die jeweils als Bestandteil einer Batteriezelle verwendet werden. Das Trägermaterial umfasst insbesondere ein metallisches Material, z. B. ein Kupfer oder Aluminium umfassendes Material bzw. Legierung.

Der hülsenartige Kern und auch das Coil (also der Kern inklusive der darauf aufgewickelten Folie) sind insbesondere in bekannter Weise ausgeführt und grundsätzlich bekannt. Der Kern weist insbesondere einen hülsenartigen Hohlraum auf. Die Umfangsfläche des Kerns ist insbesondere zylinderförmig ausgeführt. Der Kern erstreckt sich ausgehend von einem ersten Ende bis hin zu einem zweiten Ende, wobei auf der zwischen den Enden vorliegenden Umfangsfläche die Folie angeordnet ist bzw. werden kann.

Mit der vorgeschlagenen Vorrichtung wird insbesondere ein hoher Automatisierungsgrad bei gleichzeitig hoher Reproduzierbarkeit der dabei durchzuführenden Verfahrensschritte ermöglicht. Insbesondere ist die beim Einsatz von AGVs erforderliche, aufwändige Sensorik nicht bereitzustellen, weil hier eine ortsfeste Anordnung der Einrichtung vorgeschlagen wird.

Ortsfest heißt hier insbesondere, dass die Position der Vorrichtung zu der Wickelstation unveränderlich ist. Es ist also insbesondere kein AGV vorgesehen, dessen Verfahrweg frei programmierbar und gerade nicht dauerhaft fest vorgegeben ist.

Der Ständer erstreckt sich insbesondere im Wesentlichen entlang der ersten Richtung. Der Tragarm ist mit dem Ständer verbunden bzw. an diesem (beweglich) angeordnet.

Der Tragarm ist insbesondere zusammen mit dem Ständer um die Drehachse verdrehbar. Es ist dabei auch möglich, dass der Tragarm gegenüber dem Ständer verdrehbar ist, so dass der Tragarm dann entlang einer sich um die Drehachse erstreckende Umfangsrichtung gegenüber dem Ständer verdrehbar ist.

Insbesondere ist der Tragarm gegenüber dem Ständer entlang der ersten Achse verlagerbar.

Insbesondere umfasst die Vorrichtung zusätzlich eine erste Verschiebeeinheit zur Verschiebung des auf dem Tragarm angeordneten Coils oder des Kerns entlang der ersten Achse. Die erste Verschiebeeinheit ist insbesondere an dem Tragarm oder an dem Ständer angeordnet.

Über die Verschiebeeinheit kann das Coil oder der Kern auf dem Tragarm verschoben werden, insbesondere so weit, dass das Coil oder der Kern auf einen Aufnahmedorn der Wickelstation aufgeschoben werden kann.

Der Tragarm erstreckt sich insbesondere durch den hülsenartigen Kern (ggf. des Coils) hindurch bzw. kann in diesen hülsenartigen Hohlraum eingeschoben werden.

Insbesondere ist der Ständer gegenüber der Wickelstation ortsfest oder verfahrbar angeordnet. Eine Einrichtung zum Verfahren des Ständers ist ein Bestandteil der Vorrichtung und der Verfahrweg des Ständers ist gegenüber der Wickelstation unveränderbar.

Der Ständer ist insbesondere ortsfest gegenüber der Wickelstation angeordnet. Ortsfest heißt hier, dass die Position des Ständers gegenüber der Wickelstation unveränderlich ist. Eine Rotation des Ständers um die Drehachse ist dabei jedoch möglich.

Wenn der Ständer verfahrbar gegenüber der Wickelstation angeordnet ist, ist eine Einrichtung vorgesehen. Der durch die Einrichtung ermöglichte Verfahrweg des Ständers ist gegenüber der Wickelstation unveränderbar. Z. B. umfasst die Einrichtung ein Schienensystem oder eine ähnliche Führungseinrichtung, die selbst gegenüber der Wickelstation ortsfest angeordnet ist. Der Verfahrweg des Ständers ist dabei insbesondere nur in einer räumlichen Dimension möglich, also nur entlang des Verfahrwegs. Mit der Einrichtung wird eine hohe Wiederholgenauigkeit der Bewegung des Ständers gewährleistet, die durch ein AGV im Allgemeinen nicht erreicht werden kann.

Es wird weiter eine Anordnung zum Wechseln eines Coils oder eines Kerns vorgeschlagen, wobei das Coil den hülsenartigen Kern und eine darauf aufgewickelte Folie umfasst. Die Anordnung umfasst zumindest die beschriebene Vorrichtung und die Wickelstation. Die Wickelstation weist zumindest einen Aufnahmedorn auf. Der Aufnahmedorn erstreckt sich entlang einer horizontal verlaufenden zweiten Achse, wobei das Coil oder der hohle Kern auf dem Aufnahmedorn entlang der zweiten Achse verschiebbar anordenbar bzw. angeordnet ist. Der Tragarm der Vorrichtung und der Aufnahmedorn der Wickelstation sind für einen Transfer des Coils oder des Kerns (von dem Tragarm auf den Aufnahmedorn und/oder umgekehrt) geeignet zueinander (z. B. mit zueinander fluchtenden Achsen) anordenbar.

Für die für den Transfer geeignete Anordnung, z. B. zueinander fluchtende Anordnung der Achsen ist insbesondere (ausschließlich) der Ständer und/oder der Tragarm und/oder die Einrichtung gegenüber der Wickelstation zu bewegen.

Für den Transfer des Coils oder des Kerns (von dem Tragarm auf den Aufnahmedorn und/oder umgekehrt) werden die Achsen insbesondere so zueinander angeordnet, dass das Coils bzw. der Kern entlang der Richtung der Achsen verschoben werden kann und so von dem Tragarm auf den Aufnahmedorn (oder umgekehrt) wechselt. Insbesondere kann vorgesehen sein, dass sich dazu Tragarm und Aufnahmedorn gegenseitig kontaktieren. Insbesondere ist kein Kontakt zwischen Tragarm und Aufnahmedorn erforderlich (weil die Genauigkeit durch die ortsfeste Anordnung des Ständers bzw. durch die Einrichtung gewährleistet werden kann). Insbesondere umfasst die Anordnung zusätzlich eine zweite Verschiebeeinheit zur Verschiebung des auf dem Aufnahmedorns angeordneten Coils oder des Kerns entlang der zweiten Achse.

Über die zweite Verschiebeeinheit kann das Coil oder der Kern auf dem Aufnahmedorn verschoben werden, insbesondere so weit, dass das Coil oder der Kern auf einen Tragarm der Vorrichtung aufgeschoben werden kann.

Insbesondere umfasst die Anordnung zusätzlich eine erste Ablagevorrichtung für das Coil oder den Kern, wobei die erste Ablageeinrichtung gegenüber der Vorrichtung so angeordnet ist, dass der Tragarm im Rahmen einer entlang der ersten Achse erfolgenden Bewegung zumindest in den hülsenartigen Kern einfahrbar oder aus diesem entfernbar ist.

Die Ablagevorrichtung dient insbesondere der Aufnahme eines Coils oder eines Kerns, wenn dieses bzw. dieser nicht an der Wickelstation oder auf dem Tragarm angeordnet ist. Die Ablagevorrichtung dient insbesondere der Bevorratung bzw. des Transports der Coils bzw. der Kerne hin zu und weg von der Vorrichtung bzw. der Anordnung.

Insbesondere weist die Ablagevorrichtung eine Aufnahme vor, über die nur der Kern kontaktierbar ist, so dass die ggf. aufgewickelte Folie durch die Ablagevorrichtung nicht kontaktiert wird. Insbesondere können z. B. die Enden des hülsenartigen Kerns durch die Aufnahme abgestützt werden. Alternativ kann die Aufnahme nach Art eines Kragarms ausgeführt sein, auf die der Kern bzw. das Coil aufgeschoben werden kann (vergleichbar zum Kragarm der Vorrichtung oder zum Aufnahmedorn der Wickelstation).

Insbesondere umfasst die Anordnung zusätzlich eine zweite Ablagevorrichtung für das Coil oder den Kern, wobei die erste Ablagevorrichtung zur Aufnahme zumindest des Kerns und die zweite Ablagevorrichtung zur Aufnahme zumindest des Coil geeignet ausgeführt ist.

Insbesondere ist jede Ablagevorrichtung zur Aufnahme des Kerns und zur Aufnahme des Coils geeignet ausgeführt. Die Ausführungen zu der ersten Ablagevorrichtung gelten insbesondere auch für die zweite Ablagevorrichtung und umgekehrt.

Es wird weiter ein Verfahren zum Wechseln eines Coils oder eines Kerns mit der beschriebenen Anordnung vorgeschlagen. In einem Ausgangszustand ist das Coil oder der Kern auf dem

Aufnahmedorn der Wickelstation angeordnet. Das Verfahren umfasst, ausgehend von dem Ausgangszustand, zumindest die folgenden Schritte:
a) Bewegen des Tragarms hin zu dem Aufnahmedorn, so dass die Achsen zur Verschiebung des Coils oder des Kerns geeignet zueinander (z. B. fluchtend) angeordnet sind;
b) Verschieben des Coils oder des Kerns entlang der Achsen ausgehend von dem Aufnahmedorn hin zu dem Tragarm der Vorrichtung;
c) Bewegen des Tragarms hin zu einer ersten Ablagevorrichtung für das Coil oder den Kern;
d) Ablegen des Coils oder des Kerns auf der ersten Ablagevorrichtung;
e) Bewegen des Tragarms hin zu einer zweiten Ablagevorrichtung für den Kern oder das Coil;
f) Anordnen eines neuen Kerns oder Coils auf dem Tragarm;
g) Bewegen des Tragarms hin zum Aufnahmedorn, so dass die Achsen zur Verschiebung des Kerns oder des Coils geeignet zueinander (z. B. fluchtend) angeordnet sind; und
h) Verschieben des Kerns oder des Coils entlang der Achsen ausgehend von dem Tragarm hin zu dem Aufnahmedorn;
i) Betreiben der Wickelstation und Aufwickeln einer Folie auf den Kern zur Ausbildung des Coils oder Abwickeln der Folie von dem Coil.

Die obige (nicht abschließende) Einteilung der Verfahrensschritte in a) bis i) soll vorrangig nur zur Unterscheidung dienen und keine Reihenfolge und/oder Abhängigkeit erzwingen. Auch die Häufigkeit der Verfahrensschritte kann variieren. Ebenso ist möglich, dass Verfahrensschritte einander zumindest teilweise zeitlich überlagern. Insbesondere kann jeder der Schritte als ein erster Schritt und die dann folgenden Schritte nachfolgend ausgeführt werden. Insbesondere werden die Schritte a) bis i) in der angegebenen Reihenfolge durchgeführt.

Insbesondere ist der Tragarm bzw. der Ständer (oder die Einrichtung) vor Schritt a) in einer Ausgangsposition angeordnet, in der z. B. eine Wechselwirkung (z. B. Kollision oder Beeinträchtigung der Bewegungsfreiheit) mit der Wickelstation oder ggf. vorgesehenen Ablagevorrichtung ausgeschlossen werden kann.

Im Rahmen des Schrittes a) erfolgt ein Bewegen des Tragarms (ausgehend von der Ausgangsposition) hin zu dem Aufnahmedorn, so dass die Achsen zueinander (z. B. fluchtend) derart angeordnet sind, dass im Rahmen des Schrittes b) ein Verschieben des Coils der Kerns erfolgen kann. Insbesondere umfasst die Bewegung nur eine Drehung des Ständers um die Drehachse oder eine Bewegung des Tragarms um den Ständer entlang einer Umfangsrichtung. Ggf. ist zusätzlich eine Bewegung des Tragarms entlang der ersten Richtung erforderlich. Ggf. ist zusätzlich eine Bewegung des Tragarms entlang der ersten Achse gegenüber dem Ständer erforderlich.

Im Rahmen des Schrittes b) erfolgt ein Verschieben des Coils oder des Kerns entlang der Achsen ausgehend von dem Aufnahmedorn hin zu dem Tragarm der Vorrichtung. Insbesondere erfolgt diese Verschiebung durch eine (die beschriebene) zweite Verschiebeeinheit, die an der Wickelstation vorgesehen ist. Insbesondere wird im Rahmen des Schrittes b) das Coil bzw. der Kern von dem Aufnahmedorn herunter- und auf den Tragarm aufgeschoben.

Im Rahmen des Schrittes c) erfolgt ein Bewegen des Tragarms hin zu einer ersten Ablagevorrichtung für das Coil oder den Kern. Insbesondere umfasst die Bewegung nur eine Drehung des Ständers um die Drehachse oder eine Bewegung des Tragarms um den Ständer entlang einer Umfangsrichtung. Ggf. ist zusätzlich eine Bewegung des Tragarms entlang der ersten Richtung erforderlich. Ggf. erfolgt eine Bewegung des Ständers entlang des festgelegten Verfahrwegs durch die Einrichtung.

Im Rahmen des Schrittes d) erfolgt ein Ablegen des Coils oder des Kerns auf der ersten Ablagevorrichtung. Insbesondere umfasst dieses Ablegen nur eine Bewegung des Tragarms entlang der ersten Richtung (also insbesondere entlang des Ständers bzw. der vertikalen Richtung). Insbesondere wird der Tragarm nach dem Ablegen des Coils bzw. Kerns in der Ablagevorrichtung aus dem hülsenartigen Hohlraum des Kerns entfernt. Dabei wird der Tragarm insbesondere ausschließlich entlang der ersten Achse bewegt. Diese Bewegung erfolgt insbesondere relativ zum Ständer oder zusammen mit dem Ständer durch die Einrichtung. Alternativ ist nur ein Verschieben des Coils oder des Kerns entlang der ersten Achse erforderlich. Das Verschieben kann z. B. über die erste Verschiebeeinheit erfolgen.

Im Rahmen des Schrittes e) erfolgt ein Bewegen des Tragarms hin zu einer zweiten Ablagevorrichtung für den Kern oder das Coil. Insbesondere umfasst die Bewegung nur eine Drehung des Ständers um die Drehachse oder eine Bewegung des Tragarms um den Ständer entlang einer Umfangsrichtung. Alternativ oder zusätzlich umfasst die Bewegung (ausschließlich) eine Verschiebung des Tragarms entlang der ersten Achse, wobei diese Bewegung insbesondere relativ zum Ständer oder zusammen mit dem Ständer durch die Einrichtung erfolgt. Ggf. ist zusätzlich eine Bewegung des Tragarms entlang der ersten Richtung erforderlich. Ggf. erfolgt eine Bewegung des Ständers entlang des festgelegten Verfahrwegs durch die Einrichtung.

Im Rahmen des Schrittes f) erfolgt ein Anordnen eines neuen Kerns oder Coils auf dem Tragarm. Insbesondere umfasst dieser Schritt (ausschließlich) ein Einschieben des Tragarms in den hülsenförmigen Kern entlang der ersten Achse. Ggf. ist zusätzlich eine Bewegung des Tragarms entlang der ersten Achse gegenüber dem Ständer erforderlich.

Im Rahmen des Schrittes g) erfolgt ein Bewegen des Tragarms hin zum Aufnahmedorn, so dass die Achsen zueinander (z. B. fluchtend) derart angeordnet sind, dass im Rahmen des Schrittes h) ein Verschieben des Kerns oder des Coils erfolgen kann. Insbesondere umfasst die Bewegung nur eine Drehung des Ständers um die Drehachse oder eine Bewegung des Tragarms um den Ständer entlang einer Umfangsrichtung. Alternativ umfasst die Bewegung zusätzlich eine Verschiebung des Tragarms entlang der ersten Achse, wobei diese Bewegung insbesondere relativ zum Ständer oder zusammen mit dem Ständer durch die Einrichtung erfolgt. Ggf. erfolgt eine Bewegung des Ständers entlang des festgelegten Verfahrwegs durch die Einrichtung.

Im Rahmen des Schrittes h) erfolgt ein Verschieben des Kerns oder des Coils entlang der Achsen ausgehend von dem Tragarm hin zu dem Aufnahmedorn. Insbesondere erfolgt diese Verschiebung durch eine (die beschriebene) erste Verschiebeeinheit, die an der Vorrichtung vorgesehen ist. Insbesondere wird im Rahmen des Schrittes h) das Coil bzw. der Kern von dem Tragarm herunter- und auf den Aufnahmedorn aufgeschoben.

Im Rahmen des Schrittes i) erfolgt ein Betreiben der Wickelstation und ein Aufwickeln einer Folie auf den Kern zur Ausbildung des Coils oder ein Abwickeln der Folie von dem Coil.

Insbesondere wird zumindest in Schritt e) ausschließlich der Tragarm gegenüber dem Ständer entlang der ersten Achse verlagert. Alternativ wird zumindest in Schritt e) zumindest der Ständer entlang eines Verfahrwegs verfahren, wobei eine Einrichtung zum Verfahren des Ständers ein Bestandteil der Vorrichtung und der Verfahrweg des Ständers gegenüber der Wickelstation unveränderbar ist.

Das Verfahren ist insbesondere durch ein System zur Datenverarbeitung, z. B. ein Steuergerät, durchführbar, wobei das System Mittel aufweist, die zur Ausführung der Schritte des Verfahrens geeignet ausgestattet, konfiguriert oder programmiert sind bzw. die das Verfahren ausführen. Mit dem System kann zumindest
- ein Betrieb der Wickelstation;
- ein Betrieb der Vorrichtung;
- ein Betrieb der Anordnung;
- eine Bereitstellung der Ablagevorrichtung
erfolgen bzw. geregelt/gesteuert werden.

Die Vorrichtung oder die Anordnung umfasst insbesondere das System zur Datenverarbeitung.

Die Mittel des Systems umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen ermöglichen.

Es wird weiter ein Computerprogramm vorgeschlagen, umfassend Befehle, die bei der Ausführung des Programms durch einen Computer diesen veranlassen, das beschriebene Verfahren bzw. die Schritte des beschriebenen Verfahrens auszuführen.

Es wird weiter ein computerlesbares Speichermedium vorgeschlagen, umfassend Befehle, die bei der Ausführung durch einen Computer diesen veranlassen, das beschriebene Verfahren bzw. die Schritte des beschriebenen Verfahrens auszuführen.

Die Ausführungen zu der Vorrichtung sind insbesondere auf die Anordnung, das Verfahren, die Batteriezelle, das System zur Datenverarbeitung sowie auf das computerimplementierte Verfahren (also den Computer bzw. den Prozessor, das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: mehrere Wickelstationen in einer Seitenansicht;
- Fig. 2:: eine erste Ausführungsvariante einer Anordnung;
- Fig. 3:: eine Wickelstation für die Anordnung nach Fig. 2 in einer Seitenansicht;
- Fig. 4:: die Anordnung nach Fig. 2 gemäß Schritt b) des Verfahrens, in einer Seitenansicht;
- Fig. 5:: die Anordnung nach Fig. 4 gemäß Schritt c) des Verfahrens, in einer Seitenansicht;
- Fig. 6:: die Anordnung nach Fig. 5 gemäß Schritt d) des Verfahrens;
- Fig. 7:: die Anordnung nach Fig. 6 gemäß Schritt e) des Verfahrens;
- Fig. 8:: die Anordnung nach Fig. 7 unmittelbar nach Schritt f) des Verfahrens;
- Fig. 9:: die Anordnung nach Fig. 8 während Schritt g) des Verfahrens;
- Fig. 10:: die Anordnung nach Fig. 9 gemäß Schritt h) des Verfahrens;
- Fig. 11:: die Anordnung nach Fig. 10 unmittelbar nach Schritt h) des Verfahrens;
- Fig. 12:: eine zweite Ausführungsvariante einer Anordnung und Schritt d) des Verfahrens;
- Fig. 13:: die Anordnung nach Fig. 12 und Schritt e) des Verfahrens;
- Fig. 14:: eine dritte Ausführungsvariante einer Anordnung und Schritt c) des Verfahrens;
- Fig. 15:: die Anordnung nach Fig. 14 und Schritt e) des Verfahrens;
- Fig. 16:: die Anordnung nach Fig. 15 und Schritt g) des Verfahrens; und
- Fig. 17:: die Anordnung nach Fig. 16 und Schritt h) des Verfahrens.

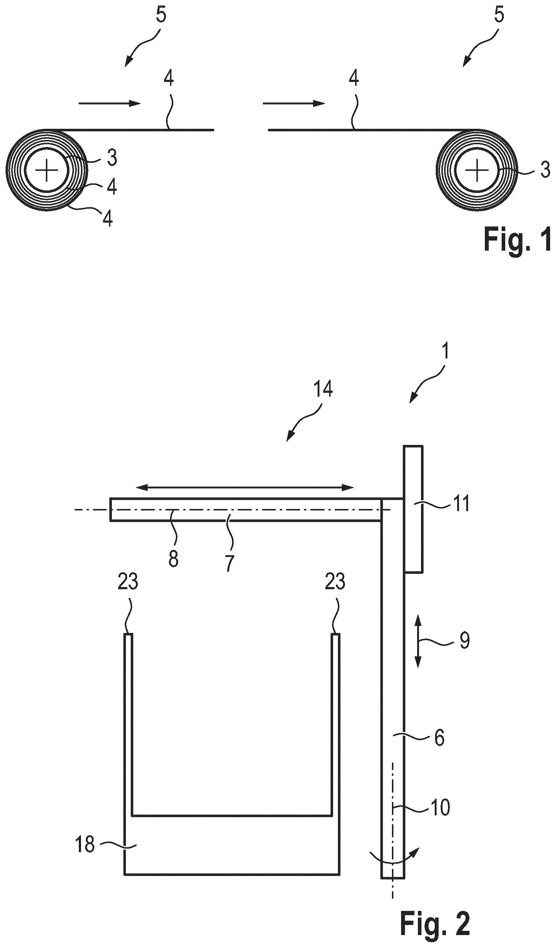

Die Fig. 1 zeigt mehrere Wickelstationen 5 in einer Seitenansicht. Jede Wickelstation 5 ist zur Aufnahme eines Kerns 3 bzw. eines Coils 2 geeignet ausgeführt. Im Rahmen des Schrittes i) des Verfahrens erfolgt ein Betreiben der Wickelstationen 5 und ein Aufwickeln einer Folie 4 auf den Kern 3 zur Ausbildung des Coils 2 (rechte Wickelstation 5) sowie ein Abwickeln der Folie 4 von dem Coil 2 (linke Wickelstation 5). Zwischen den Wickelstationen 5 kann eine Bearbeitung der Folie 4 erfolgen, z. B. eine Beschichtung oder Beschneidung.

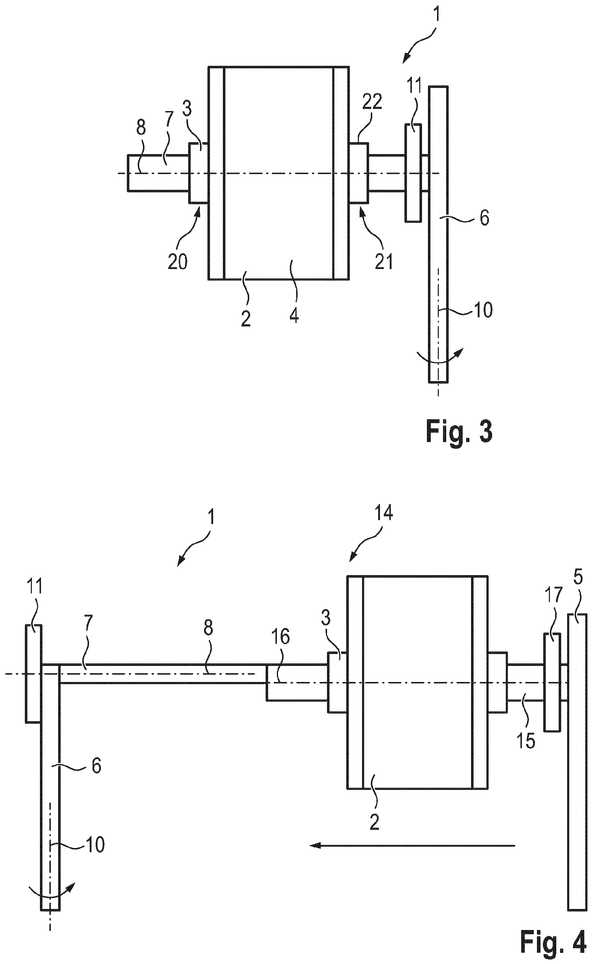

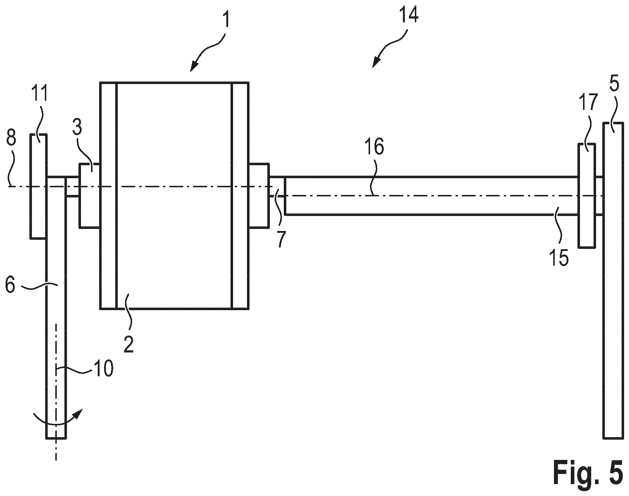

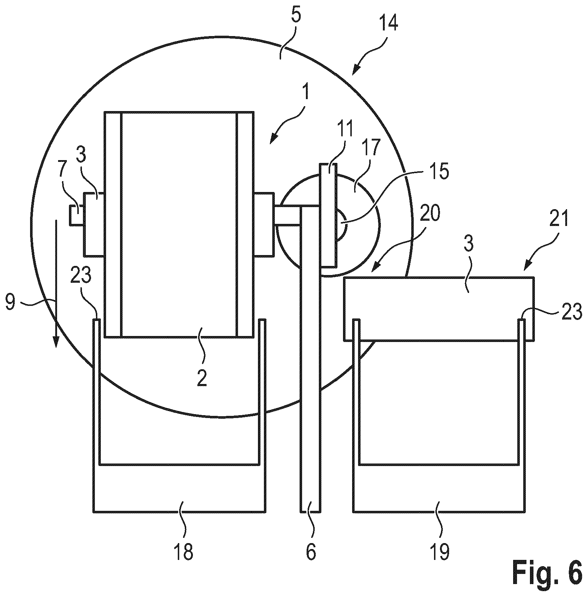

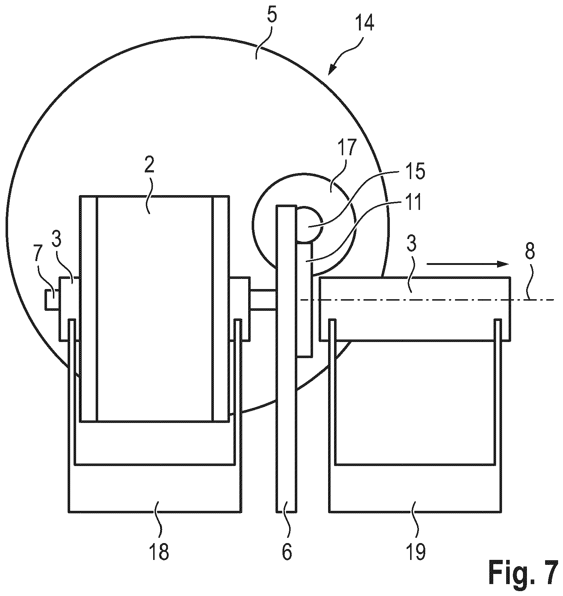

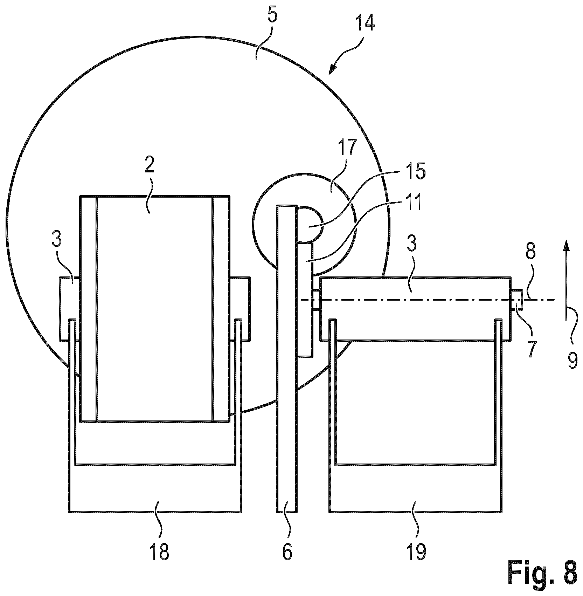

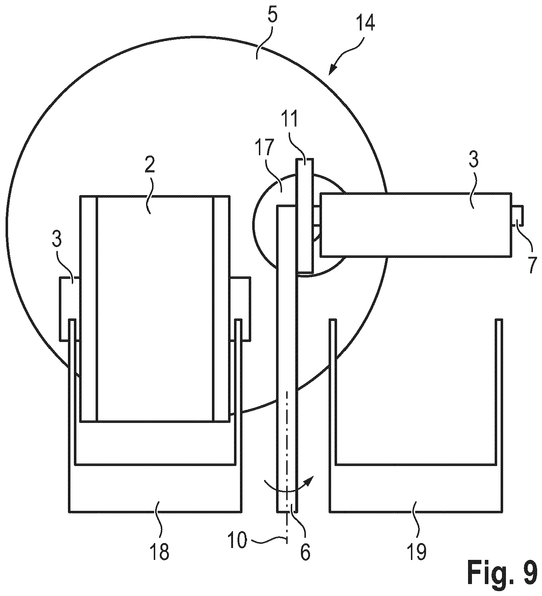

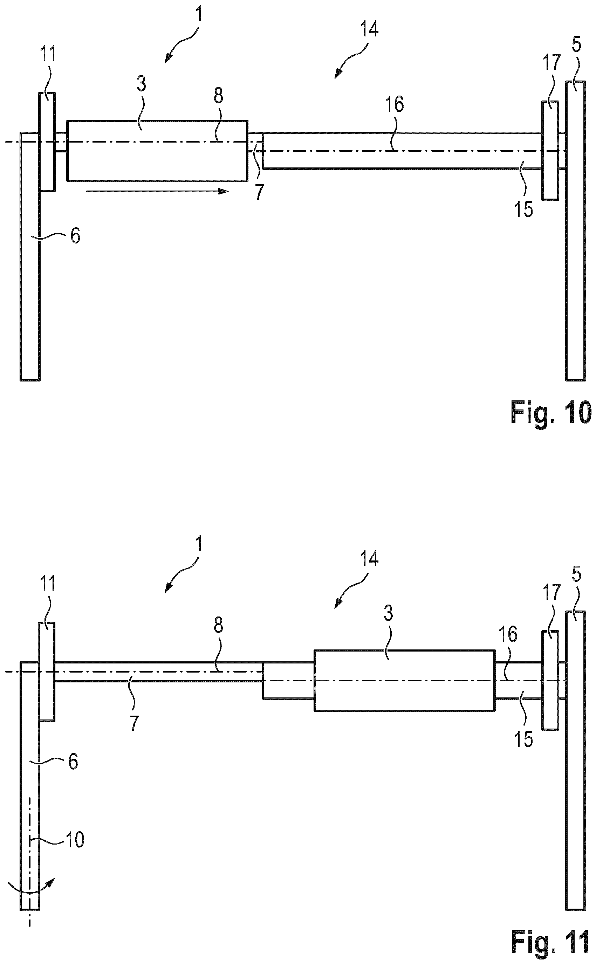

Fig. 2 zeigt eine erste Ausführungsvariante einer Anordnung 14. Fig. 3 zeigt eine Wickelstation 5 für die Anordnung 14 nach Fig. 2 in einer Seitenansicht. Fig. 4 zeigt die Anordnung 14 nach Fig. 2 gemäß Schritt b) des Verfahrens, in einer Seitenansicht. Fig. 5 zeigt die Anordnung 14 nach Fig. 4 gemäß Schritt c) des Verfahrens, in einer Seitenansicht. Fig. 6 zeigt die Anordnung 14 nach Fig. 5 gemäß Schritt d) des Verfahrens. Fig. 7 zeigt die Anordnung 14 nach Fig. 6 gemäß Schritt e) des Verfahrens. Fig. 8 zeigt die Anordnung 14 nach Fig. 7 unmittelbar nach Schritt f) des Verfahrens. Fig. 9 zeigt die Anordnung 14 nach Fig. 8 während Schritt g) des Verfahrens. Fig. 10 zeigt die Anordnung 14 nach Fig. 9 gemäß Schritt h) des Verfahrens. Fig. 11 zeigt die Anordnung 14 nach Fig. 10 unmittelbar nach Schritt h) des Verfahrens. Die Fig. 2 bis 11 werden im Folgenden gemeinsam beschrieben. Auf die Ausführungen zu Fig. 1 wird verwiesen.

Die Anordnung 14 umfasst eine Vorrichtung 1 und eine Wickelstation 5. Die Vorrichtung 1 ist gegenüber einer Wickelstation 5, an der die Folie 4 von dem Coil 2 abwickelbar oder auf den Kern 3 aufwickelbar ist, ortsfest angeordnet. Die Vorrichtung 1 weist einen Ständer 6 und einen an dem Ständer 6 angeordneten Tragarm 7 auf. Der Tragarm 7 erstreckt sich entlang einer horizontal verlaufenden ersten Achse 8. Der hohle Kern 3 oder das Coil 2 ist auf dem Tragarm 7 entlang der ersten Achse 8 verschiebbar anordenbar bzw. angeordnet. Der Ständer 6 ist mit dem Tragarm 7 gegenüber der Wickelstation 5 um eine entlang einer vertikalen ersten Richtung 9 verlaufenden Drehachse 10 verdrehbar.

Der hülsenartige Kern 3 und auch das Coil 2 (also der Kern 3 inklusive der darauf aufgewickelten Folie 4) sind in bekannter Weise ausgeführt. Der Kern 3 weist einen hülsenartigen Hohlraum auf. Die Umfangsfläche des Kerns 3 ist zylinderförmig ausgeführt. Der Kern 3 erstreckt sich ausgehend von einem ersten Ende 20 bis hin zu einem zweiten Ende 21, wobei auf der zwischen den Enden 20, 21 vorliegenden Umfangsfläche 22 die Folie 4 angeordnet ist bzw. werden kann.

Die Wickelstation 5 weist einen Aufnahmedorn 15 auf. Der Aufnahmedorn 15 erstreckt sich entlang einer horizontal verlaufenden zweiten Achse 16, wobei das Coil 2 oder der hohle Kern 3 auf dem Aufnahmedorn 15 entlang der zweiten Achse 16 verschiebbar anordenbar bzw. angeordnet ist. Der Tragarm 7 der Vorrichtung 1 und der Aufnahmedorn 15 der Wickelstation 5 sind für einen Transfer des Coils 2 oder des Kerns 3 (von dem Tragarm 7 auf den Aufnahmedorn 15 und umgekehrt) geeignet, z. B. mit zueinander fluchtenden Achsen 8, 16, anordenbar.

Der Ständer 6 erstreckt sich im Wesentlichen entlang der ersten Richtung 9. Der Tragarm 7 ist mit dem Ständer 6 verbunden bzw. an diesem beweglich angeordnet

Der Tragarm 7 ist zusammen mit dem Ständer 6 oder unabhängig von Ständer 6 um die Drehachse 10 verdrehbar. Der Tragarm 7 ist gegenüber dem Ständer 6 zudem entlang der ersten Achse 8 und entlang der ersten Richtung 9 verlagerbar.

Die Vorrichtung 1 umfasst zusätzlich eine erste Verschiebeeinheit 11 zur Verschiebung des auf dem Tragarm 7 angeordneten Coils 2 oder des Kerns 3 entlang der ersten Achse 8. Die erste Verschiebeeinheit 11 ist an dem Tragarm 7 angeordnet.

Über die erste Verschiebeeinheit 11 kann das Coil 2 oder der Kern 3 auf dem Tragarm 7 verschoben werden, insbesondere so weit, dass das Coil 2 oder der Kern 3 auf einen Aufnahmedorn 15 der Wickelstation 5 aufgeschoben werden kann.

Der Tragarm 7 erstreckt sich durch den hülsenartigen Kern 3 (ggf. des Coils 2) hindurch bzw. kann in diesen hülsenartigen Hohlraum eingeschoben werden.

Der Ständer 6 ist gegenüber der Wickelstation 5 ortsfest. Ortsfest heißt hier, dass die Position des Ständers 6 gegenüber der Wickelstation 5 unveränderlich ist. Eine Rotation des Ständers 6 um die Drehachse 10 ist dabei jedoch möglich.

Der Tragarm 7 bzw. der Ständer 6 (oder die Vorrichtung 1) sind vor Schritt a) in einer Ausgangsposition (siehe z. B. Fig. 2) angeordnet, in der z. B. eine Wechselwirkung (z. B. Kollision oder Beeinträchtigung der Bewegungsfreiheit) mit der Wickelstation 5 oder einer vorgesehen Ablagevorrichtung 18, 19 ausgeschlossen werden kann.

Im Rahmen des Schrittes a) erfolgt ein Bewegen des Tragarms 7 (ausgehend von der Ausgangsposition) hin zu dem Aufnahmedorn 15, so dass die Achsen 8, 16 derart zueinander (z. B. fluchtend) angeordnet sind, dass das Coil 2 hin zu dem Tragarm 7 verschiebbar ist (siehe Fig. 4). Die Bewegung umfasst nur eine Drehung des Ständers 6 bzw. des Tragarms 7 um die Drehachse 10.

Im Rahmen des Schrittes b) erfolgt ein Verschieben des Coils 2 entlang der Achsen 8, 16 ausgehend von dem Aufnahmedorn 15 hin zu dem Tragarm 7 der Vorrichtung 1 (siehe Fig. 4). Diese Verschiebung erfolgt durch eine zweite Verschiebeeinheit 17, die an der Wickelstation 5 vorgesehen ist. Im Rahmen des Schrittes b) wird das Coil 2 von dem Aufnahmedorn 15 herunter- und auf den Tragarm 7 aufgeschoben (siehe Fig. 5).

Im Rahmen des Schrittes c) erfolgt ein Bewegen des Tragarms 7 hin zu einer ersten Ablagevorrichtung 18 für das Coil 2. Diese Bewegung umfasst nur eine Drehung des Ständers 6 bzw. des Tragarms 7 um die Drehachse 10 (siehe Fig. 6).

Im Rahmen des Schrittes d) erfolgt ein Ablegen des Coils 2 auf der ersten Ablagevorrichtung 18. Dieses Ablegen umfasst nur eine Bewegung des Tragarms 7 entlang der ersten Richtung 9 (siehe Fig. 6).

Die Ablagevorrichtung 18 weist eine Aufnahme 23 auf, über die nur der Kern 3 kontaktierbar ist, so dass die aufgewickelte Folie 4 durch die Ablagevorrichtung 18 nicht kontaktiert wird. Die Enden 20, 21 des hülsenartigen Kerns 3 werden durch die Aufnahme 23 abgestützt.

Der Tragarm 7 wird nach dem Ablegen des Coils 2 in der ersten Ablagevorrichtung 18 aus dem hülsenartigen Hohlraum des Kerns 3 entfernt. Dabei wird der Tragarm 7 ausschließlich entlang der ersten Achse 8 gegenüber dem Ständer 6 bewegt (siehe Fig. 7).

Im Rahmen des Schrittes e) erfolgt ein Bewegen des Tragarms 7 hin zu einer zweiten Ablagevorrichtung 19 für einen Kern 3. Diese Bewegung umfasst ausschließlich eine Verschiebung des Tragarms 7 entlang der ersten Achse 8, wobei diese Bewegung relativ zum Ständer 6 erfolgt (siehe Fig. 8).

Im Rahmen des Schrittes f) erfolgt ein Anordnen des (neuen) Kerns 3 auf dem Tragarm 7. Dieser Schritt umfasst ausschließlich ein Einschieben des Tragarms 7 in den hülsenförmigen Kern 3 entlang der ersten Achse 8. Die Ablagevorrichtungen 18, 19 sind dafür derart angeordnet, dass die auf den Ablagevorrichtungen 18, 19 abgelegten Kerne 3 koaxial zueinander angeordnet sind.

Im Rahmen des Schrittes g) erfolgt ein Bewegen des Tragarms 7 hin zum Aufnahmedorn 15, so dass die Achsen 8, 16 derart zueinander (z. B. fluchtend) angeordnet sind, dass der Kern 3 hin zum Aufnahmedorn 15 verschiebbar ist. Diese Bewegung umfasst eine Drehung des Ständers 6 bzw. des Tragarms 7 um die Drehachse 10. Dabei ist zusätzlich eine Bewegung des Tragarms 7 entlang der ersten Richtung 9 erforderlich, um den Kern 3 aus der zweiten Ablagevorrichtung 19 zu entnehmen (siehe Fig. 9 und Fig. 10).

Im Rahmen des Schrittes h) erfolgt ein Verschieben des Kerns 3 entlang der koaxial zueinander angeordneten Achsen 8, 16 ausgehend von dem Tragarm 7 hin zu dem Aufnahmedorn 15. Diese Verschiebung erfolgt durch eine erste Verschiebeeinheit 11, die an der Vorrichtung 1 vorgesehen ist. Im Rahmen des Schrittes h) wird der Kern 3 von dem Tragarm 7 herunter- und auf den Aufnahmedorn 15 aufgeschoben (siehe Fig. 11).

Im Rahmen des Schrittes i) erfolgt ein Betreiben der Wickelstation 5 und ein Aufwickeln einer Folie 4 auf den Kern 3 zur Ausbildung des Coils 2 oder ein Abwickeln der Folie 4 von dem Coil 2 (siehe Fig. 1).

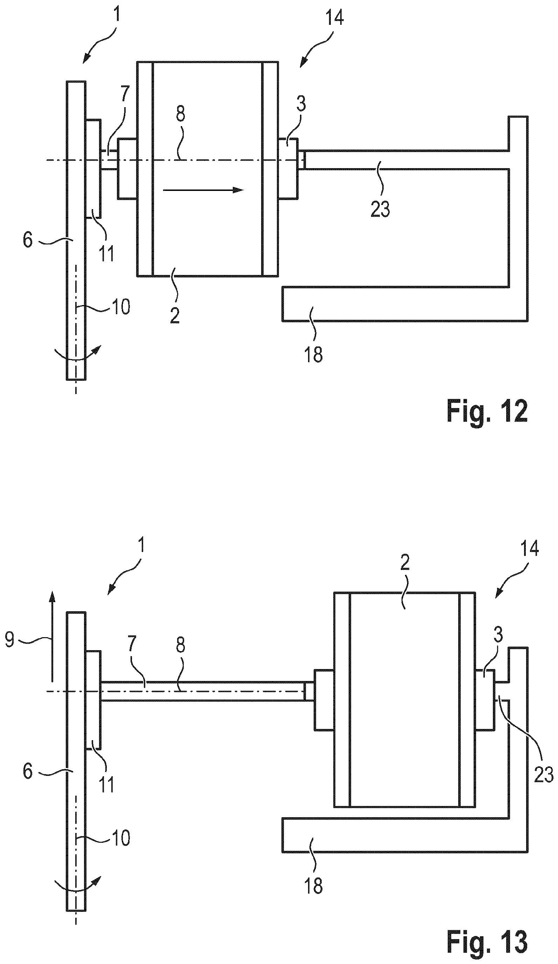

Fig. 12 zeigt eine zweite Ausführungsvariante einer Anordnung 14 und Schritt d) des Verfahrens. Im Rahmen des Schrittes d) erfolgt ein Ablegen des Coils 2 auf der ersten Ablagevorrichtung 18. Hier ist die Ablagevorrichtung 18 derart ausgeführt, dass ein Coil 2 (oder ein Kern 3) nur durch ein Verschieben entlang der ersten Achse von dem Tragarm 7 hin zu der Ablagevorrichtung 18 überführt werden kann. Die Aufnahme 23 der Ablagevorrichtung 18 ist dazu nach Art eines Kragarms ausgeführt, auf die das Coil 2 aufgeschoben werden kann (vergleichbar zum Tragarm 7 der Vorrichtung 1 oder zum Aufnahmedorn 15 der Wickelstation 5). Dieses Ablegen umfasst nur eine Drehung des Tragarms 7 um die Drehachse 10, so dass nach der Drehung die erste Achse 8 (im Wesentlichen) koaxial zur Aufnahme 23 der Ablagevorrichtung 18 angeordnet ist.

Fig. 13 zeigt die Anordnung 14 nach Fig. 12 und Schritt e) des Verfahrens. Im Rahmen des Schrittes e) erfolgt ein Bewegen des Tragarms 7 hin zu einer zweiten Ablagevorrichtung 19 für den Kern 3. Der Tragarm 7 wird nach dem Ablegen des Coils 3 (nicht zwingend erforderlich) entlang der ersten Richtung 9 relativ zum Ständer 6 bewegt und der Ständer 6 dreht sich um die Drehachse 10 hin zur zweiten Ablagevorrichtung 19.

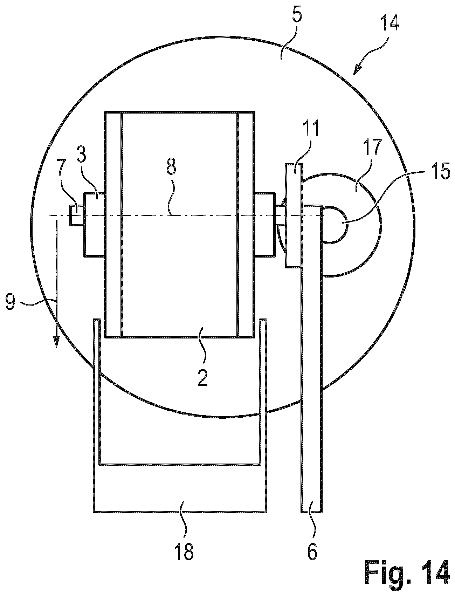

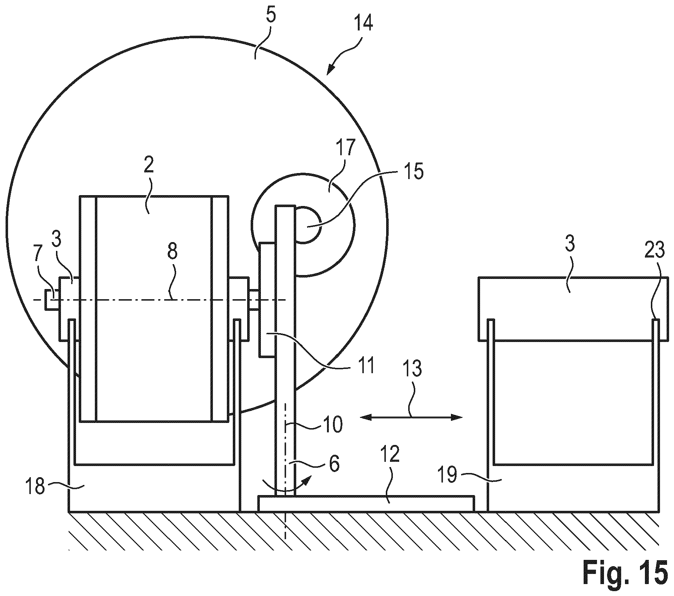

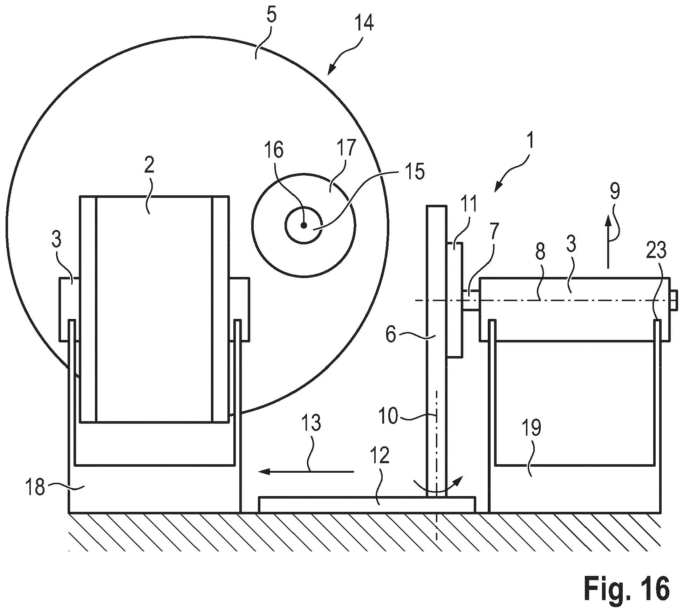

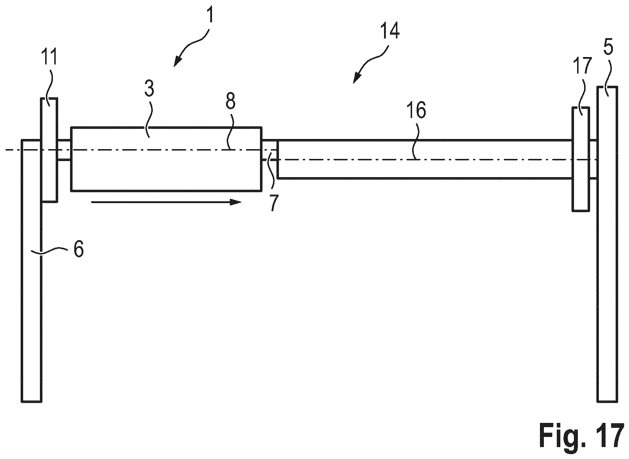

Fig. 14 zeigt eine dritte Ausführungsvariante einer Anordnung 14 und Schritt c) des Verfahrens. Fig. 15 zeigt die Anordnung 14 nach Fig. 14 und Schritt e) des Verfahrens. Fig. 16 zeigt die Anordnung 14 nach Fig. 15 und Schritt g) des Verfahrens. Fig. 17 zeigt die Anordnung 14 nach Fig. 16 und Schritt h) des Verfahrens. Die Fig. 14 bis 17 werden im Folgenden gemeinsam beschrieben. Auf die Ausführungen zu Fig. 1 bis 13 wird verwiesen.

Im Rahmen des Schrittes c) erfolgt ein Bewegen des Tragarms 7 hin zu der ersten Ablagevorrichtung 18 für das Coil 2. Diese Bewegung umfasst eine Drehung des Ständers 6 bzw. des Tragarms 7 um die Drehachse 10. Zusätzlich ist eine Bewegung des Tragarms 7 entlang der ersten Richtung 9 erforderlich (siehe Fig. 14).

Im Rahmen des Schrittes d) erfolgt ein Ablegen des Coils 2 auf der ersten Ablagevorrichtung 18. Dieses Ablegen erfordert nur eine Bewegung des Tragarms 7 entlang der ersten Richtung 9 (siehe Fig. 14).

Der Tragarm 7 wird nach dem Ablegen des Coils 2 in der Ablagevorrichtung 18 aus dem hülsenartigen Hohlraum des Kerns 3 entfernt. Diese Bewegung erfolgt zusammen mit dem Ständer 6 durch die Einrichtung 12 (siehe Fig. 15). Ggf. wird dabei der Tragarm 7 entlang der ersten Achse 8 bewegt.

Im Rahmen des Schrittes e) erfolgt ein Bewegen des Tragarms 7 hin zu einer zweiten Ablagevorrichtung 19 für den Kern 3. Die Bewegung umfasst ggf. eine Drehung des Ständers 6 um die Drehachse 10 sowie eine Bewegung zusammen mit dem Ständer 6 durch die Einrichtung 12 entlang des festgelegten Verfahrwegs 13 (siehe Fig. 15).

Im Rahmen des Schrittes f) erfolgt ein Anordnen eines neuen Kerns 3 auf dem Tragarm 7. Dieser Schritt umfasst ausschließlich ein Einschieben des Tragarms 7 in den hülsenförmigen

Kern 3 entlang der ersten Achse 8. Diese Bewegung erfolgt ggf. zusammen mit dem Ständer 6 durch die Einrichtung 12 (siehe Fig. 15 und 16).

Im Rahmen des Schrittes g) erfolgt ein Bewegen des Tragarms 7 hin zum Aufnahmedorn 15, so dass die Achsen 8, 16 zueinander derart (z. B. fluchtend) angeordnet sind, dass im Rahmen des Schrittes h) die Verschiebung erfolgen kann. Die Bewegung umfasst eine Drehung des Ständers 6 um die Drehachse 10 sowie eine Bewegung zusammen mit dem Ständer 6 durch die Einrichtung 12 entlang des festgelegten Verfahrwegs 13 (siehe Fig. 16)

Im Rahmen des Schrittes h) erfolgt ein Verschieben des Kerns 3 entlang der Achsen 8, 16 ausgehend von dem Tragarm 7 hin zu dem Aufnahmedorn 15. Diese Verschiebung erfolgt durch eine erste Verschiebeeinheit 11, die an der Vorrichtung 1 vorgesehen ist. Im Rahmen des Schrittes h) wird der Kern 3 von dem Tragarm 7 herunter- und auf den Aufnahmedorn 15 aufgeschoben.

### Bezugszeichenliste

- 1: Vorrichtung
- 2: Coil
- 3: Kern
- 4: Folie
- 5: Wickelstation
- 6: Ständer
- 7: Tragarm
- 8: erste Achse
- 9: erste Richtung
- 10: Drehachse
- 11: erste Verschiebeeinheit
- 12: Einrichtung
- 13: Verfahrweg
- 14: Anordnung
- 15: Aufnahmedorn
- 16: zweite Achse
- 17: zweite Verschiebeeinheit
- 18: erste Ablagevorrichtung
- 19: zweite Ablagevorrichtung
- 20: erstes Ende
- 21: zweites Ende
- 22: Umfangsfläche
- 23: Aufnahme

## Patentansprüche

1. Vorrichtung (1) zum Wechseln eines Coils (2) oder eines Kerns (3), wobei das Coil (2) den hülsenartigen Kern (3) und eine darauf aufgewickelte Folie (4) umfasst; wobei die Vorrichtung (1) gegenüber einer Wickelstation (5), an der die Folie (4) von dem Coil (2) abwickelbar oder auf den Kern (3) aufwickelbar ist, ortsfest angeordnet ist; wobei die Vorrichtung (1) zumindest einen Ständer (6) und einen an dem Ständer (6) angeordneten Tragarm (7) aufweist, wobei sich der Tragarm (7) entlang einer horizontal verlaufenden ersten Achse (8) erstreckt und wobei das Coil (2) oder der Kern (3) auf dem Tragarm (7) entlang der ersten Achse (8) verschiebbar anordenbar ist; wobei der Ständer (6) mit dem Tragarm (7) gegenüber der Wickelstation (5) zumindest um eine entlang einer vertikalen ersten Richtung (9) verlaufenden Drehachse (10) verdrehbar ist.

2. Vorrichtung (1) nach Patentanspruch 1, wobei der Tragarm (7) gegenüber dem Ständer (6) entlang der ersten Achse (8) verlagerbar ist.

3. Vorrichtung (1) nach einem der vorhergehenden Patentansprüche, zusätzlich umfassend eine erste Verschiebeeinheit (11) zur Verschiebung des auf dem Tragarm (7) angeordneten Coils (2) oder des Kerns (3) entlang der ersten Achse (8).

4. Vorrichtung (1) nach einem der vorhergehenden Patentansprüche, wobei der Ständer (6) gegenüber der Wickelstation (5) ortsfest oder verfahrbar angeordnet ist; wobei eine Einrichtung (12) zum Verfahren des Ständers (6) ein Bestandteil der Vorrichtung (1) und ein Verfahrweg (13) des Ständers (6) gegenüber der Wickelstation (5) unveränderbar ist.

5. Anordnung (14) zum Wechseln eines Coils (2) oder eines Kerns (3), wobei das Coil (2) den hülsenartigen Kern (3) und eine darauf aufgewickelte Folie (4) umfasst; wobei die Anordnung (14) zumindest eine Vorrichtung (1) nach einem der vorhergehenden Patentansprüche und die Wickelstation (5) umfasst; wobei die Wickelstation (5) zumindest einen Aufnahmedorn (15) aufweist; wobei sich der Aufnahmedorn (15) entlang einer horizontal verlaufenden zweiten Achse (16) erstreckt und wobei das Coil (2) oder der Kern (3) auf dem Aufnahmedorn (15) entlang der zweiten Achse (16) verschiebbar anordenbar ist; wobei der Tragarm (7) der Vorrichtung (1) und der Aufnahmedorn (15) für einen Transfer des Coils (2) oder des Kerns (3) geeignet zueinander anordenbar sind.

6. Anordnung (14) nach Patentanspruch 5, zusätzlich umfassend eine zweite Verschiebeeinheit (17) zur Verschiebung des auf dem Aufnahmedorn (15) angeordneten Coils (2) oder des Kerns (3) entlang der zweiten Achse (16).

7. Anordnung (14) nach einem der vorhergehenden Patentansprüche 5 und 6, zusätzlich umfassend eine erste Ablagevorrichtung (18) für das Coil (2) oder den Kern (3), wobei die erste Ablagevorrichtung (18) gegenüber der Vorrichtung (1) so angeordnet ist, dass der Tragarm (7) im Rahmen einer entlang der ersten Achse (8) erfolgenden Bewegung zumindest in den hülsenartigen Kern (3) einfahrbar oder aus diesem entfernbar ist.

8. Anordnung (1) nach Patentanspruch 7, zusätzlich umfassend eine zweite Ablagevorrichtung (19) für das Coil (2) oder den Kern (3), wobei die erste Ablagevorrichtung (18) zur Aufnahme zumindest des Kerns (3) und die zweite Ablagevorrichtung (19) zur Aufnahme zumindest des Coil (2) geeignet ausgeführt ist.

9. Verfahren zum Wechseln eines Coils (2) oder eines Kerns (3) mit einer Anordnung (14) nach einem der vorhergehenden Patentansprüche, wobei in einem Ausgangszustand das Coil (2) oder der Kern (3) auf dem Aufnahmedorn (15) der Wickelstation (5) angeordnet ist; zumindest umfassend die folgenden Schritte ausgehend von dem Ausgangszustand:
a) Bewegen des Tragarms (7) hin zu dem Aufnahmedorn (15), so dass die Achsen (8, 16) für ein Verschieben des Coils (2) oder des Kerns (3) geeignet zueinander angeordnet sind;
b) Verschieben des Coils (2) oder des Kerns (3) entlang der Achsen (8, 16) ausgehend von dem Aufnahmedorn (15) hin zu dem Tragarm (7) der Vorrichtung (1);
c) Bewegen des Tragarms (7) hin zu einer ersten Ablagevorrichtung (18) für das Coil (2) oder den Kern (3);
d) Ablegen des Coils (2) oder des Kerns (3) auf der ersten Ablagevorrichtung (18);
e) Bewegen des Tragarms (7) hin zu einer zweiten Ablagevorrichtung (19) für den Kern (3) oder das Coil (2);
f) Anordnen eines neuen Kerns (3) oder Coils (2) auf dem Tragarm (7);
g) Bewegen des Tragarms (7) hin zum Aufnahmedorn (15), so dass die Achsen (8, 16) für ein Verschieben des Kerns (3) oder des Coils (2) geeignet zueinander angeordnet sind; und
h) Verschieben des Kerns (3) oder des Coils (2) entlang der Achsen (8, 16) ausgehend von dem Tragarm (7) hin zu dem Aufnahmedorn (15);
i) Betreiben der Wickelstation (5) und Aufwickeln einer Folie (4) auf den Kern (3) zur Ausbildung des Coils (2) oder Abwickeln der Folie (4) von dem Coil (2).

10. Verfahren nach Patentanspruch 9, wobei zumindest in Schritt e) ausschließlich der Tragarm (7) gegenüber dem Ständer (6) entlang der ersten Achse (8) verlagert wird oder zumindest der Ständer (6) entlang eines Verfahrwegs (13) verfahren wird, wobei eine Einrichtung (12) zum Verfahren des Ständers (6) ein Bestandteil der Vorrichtung (1) und der Verfahrweg (13) des Ständers (6) gegenüber der Wickelstation (5) unveränderbar ist.
